# EUROPÄISCHE PATENTANMELDUNG

(11) **EP 1 148 678 A2**
(43) Veröffentlichungstag der Anmeldung: **24.10.2001**
(21) Anmeldenummer: 01108110.6
(22) Anmeldetag: 30.03.2001
(51) Int. Cl.: H04L 12/40

(54) **Datenbus-Einrichtung**

(30) Priorität: 18.04.2000 DE 10019034
(71) Anmelder: Merten GmbH & Co. KG, 51674 Wiehl (DE)
(72) Erfinder: Ludolf, Wilhelm S., Dr., 72622 Nürtingen (DE); Kunert, Jürgen, Dipl.-Ing., 51702 Bergneustadt (DE)
(74) Vertreter: Selting, Günther, Dipl.-Ing.

(57) **Zusammenfassung**

Die Erfindung bezieht sich auf eine Datenbus-Einrichtung mit einem über Knoten (11) verzweigten Datennetz, an dessen Zweigenden Busteilnehmer (13-13f) anschließbar sind, zwischen denen in beiden Richtungen ein Datenverkehr durchführbar ist, der über wenigstens einen Knoten läuft, mit dem wenigstens zwei Anschlussleitungen (14,14a-14g) des Datennetzes verbunden sind. Die Aufgabe der Erfindung besteht darin, eine Einrichtung zu schaffen, mit deren Hilfe die Datenrate eines Datenbusnetzes erhöht werden kann, so dass dieses Datenbusnetz, das von seiner Topologie her eine niedrige Übertragungsgeschwindigkeit zulässt, für hohe Übertragungsgeschwindigkeiten benutzt werden kann. Es wird vorgeschlagen, dass für jede Anschlussleitung des Knotens (11) Mittel zum Erkennen der Datenrichtungen von durchlaufenden Daten vorgesehen sind, dass für jede Anschlussleitung des Knotens Mittel zum richtungsabhängigen Verteilen der auf dieser Anschlussleitung ankommenden Daten auf die anderen Anschlussleitungen vorgesehen sind, und dass Mittel vorgesehen sind, die verhindern, dass die auf einer Anschlussleitung ankommenden Daten wieder in diese Anschlussleitung eingekoppelt werden.

## Beschreibung

Die Erfindung bezieht sich auf eine Datenbus-Einrichtung mit einem über Knoten verzweigten Datennetz, an dessen Zweigenden Busteilnehmer anschließbar sind, zwischen denen in beiden Richtungen ein Datenverkehr durchführbar ist, der über wenigstens einen Knoten läuft, mit dem wenigstens zwei Anschlussleitungen des Datennetzes verbunden sind.

Netzwerke zur Datenübertragung (>1Mbit/s) erfordern eine durchgängige Planung der Netzwerkstruktur und sorgfältige Verlegung der Anschlussleitungen, auch unter HF- Gesichtspunkten.

Alle Leitungen müssen wellenwiderstandskonform abgeschlossen werden, andernfalls entstehen Signalreflexionen. Das verlegte Kabelnetzwerk wird in der Regel eingemessen und abgenommen.

Netzwerke zu Steuerungszwecken für die Gebäudeautomatisierung arbeiten in der Regel mit sehr viel niedrigeren Bitraten, hier sind sogenannte "Baumstrukturen" in der Verlegung üblich und zulässig. Diese Verlegeart hat zur Folge, dass höherfrequente Übertragungen aufgrund des HF-Verhaltens der Baumstruktur nicht möglich sind. Ein Betreiben dieser Netze bei Bitraten um oder etwas über 1 Mbit/s ist nur unter großem apparativen Aufwand möglich und wirtschaftlich nicht sinnvoll. Es sind beispielsweise adaptive Regelsysteme und ein sehr aufwendiger Filteralgorithmus bei jedem Teilnehmer vorgeschlagen worden.

Die Aufgabe der Erfindung besteht darin, eine Datenbus-Einrichtung zu schaffen, mit deren Hilfe die Datenrate eines Datenbusnetzes erhöht werden kann, so dass dieses Datenbusnetz, das von seiner Topologie her nur eine niedrige Übertragungsgeschwindigkeit zulässt, für höhere Übertragungsgeschwindigkeiten benutzt werden kann.

Ziel ist es, eine einfache Netzstruktur zu schaffen, die es erlaubt, die übliche Busnetzstruktur in der Gebäudesystemtechnik zu verwenden, die in der Installation keine besonderen Anforderungen hinsichtlich Netzanpassung, Abgleich, Wellenwiderstandsanpassung und Leitungsabschluss stellt.

Beispielsweise sollen Busnetze wie sie für den EIB-Bus (Europäischer Installationsbus) oder LON-Bus üblich sind, verwendet werden, so dass neben Schmalbandübertragungen zum Schalten, Steuern, Regeln und Überwachungen, auch Breitbandübertragungen wie Multimediaanwendungen für Video, ISDN und Internet möglich sind.

Die Aufgabe wird erfindungsgemäß durch die in Anspruch 1 aufgeführten Maßnahmen gelöst. Weiterbildungen sind in den Unteransprüchen beschrieben.

Die Erfindung geht von der Überlegung aus, dass die an sich sehr komplizierte und nicht standardisierbare Verkabelungsstruktur für die Hausleittechnik standardisiert und extrem vereinfacht werden kann, indem alle Verbindungen innerhalb des Datennetzes auf definierte zielgerichtete Punkt-zu-Punkt-Verbindungen reduziert werden.

Erfindungsgemäß werden für jede Anschlussleitung des Knotens Mittel zum Erkennen der Datenrichtungen von durchlaufenden Daten vorgesehen, wobei für jede Anschlussleitung des Knotens Mittel zum richtungsabhängigen Verteilen der auf dieser Anschlussleitung ankommenden Daten auf die anderen Anschlussleitungen vorgesehen sind, und schließlich Mittel vorgesehen sind, die verhindern, dass die auf einer Anschlussleitung ankommenden Daten wieder in dieselbe Anschlussleitung eingekoppelt werden.

Dadurch lässt sich das Wellenwiderstandsniveau durchgängig sicherstellen.

Gemäß einer vorteilhaften Weiterbildung der Erfindung (Anspruch 2) lässt sich ein Leitungsfehlabschluss sicher erkennen. In diesem Fall wird das betroffene Leitungssegment abgekoppelt.

Verzweigungen oder Zusammenführungen von mehr als zwei Leitungssegmenten können in einem aktiven Knoten realisiert werden, der Schnittstellen zu den Leitungen enthält und die Daten mit einem Koppelfeld verteilt. In einer erweiterten Ausführung ist es möglich, durch eine Koppelfeldsteuerung, z.B. durch den EIB-Bus, aktiv Einfluss auf die Signalverteilung zu nehmen. Dadurch ist eine bevorzugte Kommunikation zwischen Busteilnehmern in besonderen Situationen möglich, wobei je nach Netzstruktur auch mehrere schnelle Datenverbindungen parallel möglich sind. Selbstverständlich kann ein Knoten auch, ohne dass er eine Verzweigung bedient, zur reinen Regeneration der auf der Strecke bedämpften Signale benutzt werden.

Jeder Knoten kann eine Schnittstelle zum Abzweigen von Leitungszweigen, die Schaltung zur Erkennung der Datenrichtung, eine Schaltung zum Verteilen von durchlaufenden Daten, eine Einrichtung zur Erkennung von Leitungsfehlabschlüssen sowie bei einem aktiven Knoten Sendeverstärker, Empfangsverstärker und gegebenenfalls jeweils eine Pulsformung bzw. einen Equalizer für den Sende- und Empfangszweig enthalten. Die genannten Komponenten können als Baueinheit ausgeführt sein, beispielsweise als Zweifach-, Dreifach-, Vierfachknoten und n-fach Knoten an den Verzeigungsstellen des Datennetzes in Dosen eingebaut werden.

Die eigentliche Erkennung und Trennung der Ausbreitungsrichtungen der elektrischen Signale auf der Leitung kann nach dem Prinzip einer aktiven oder passiven Gabelschaltung erfolgen. Dadurch wird es möglich, ein ankommendes Signal in einem Koppelfeld auf alle abgehenden Leitungen zu verteilen, ohne jedoch wieder das ankommende Signal in den speisenden Zweig einzukoppeln. Die einzelnen Signale überlagern sich ungestört und können sich so auf den jeweils angeschlossenen Leitungen ausbreiten.

Durch diese Technik wird es möglich, Mehrfachreflexionen und Echos wirksam zu verhindern. Deshalb kann so ein völlig "transparentes Netzwerk" geschaffen werden, das keinerlei Restriktionen bezüglich Protokollen u.dgl. unterliegt. Damit sind Verfahren zur Kollisionserkennung und -vermeidung in vollem Umfang anwendbar.

Gemäß einer Weiterbildung der Erfindung ist zusätzlich zum Datenbus ein Steuerbus vorgesehen, wobei die Verteileinrichtung des Knotens eine Steuerung zum Freischalten wenigstens eines Leitungszweiges des Datennetzes des Datenbusses enthält, an die der Steuerbusses angeschlossen ist.

Vorhandene EIB-Strukturen, die mit dem EIB-Installationskabel ausgeführt sind, können auf dem zweiten Adernpaar durch diese Technik höherbitratige Daten führen. Dadurch eröffnen sich bei festgelegter Kabelstruktur auch nachträglich noch Möglichkeiten, datenintensivere Verbindungen aufzubauen, als sie im normalen EIB-Rahmen möglich wären.

Zu diesem Zweck können in vorhandene Elektro-Installationsdosen unter die EIB-Elemente die Knoten in Form flacher "Pillen" eingesetzt werden. Diese enthalten Anschlusselemente, welche mit dem in die Elektro-Installationsdose eingesetzten Busteilnehmer in Kontakt kommen.

Durch die Verknüpfung des höherbitratigen Steuerbusses mit beispielsweise dem EIB Netz, ist es möglich, die Längenrestriktionen des Datenbusses, die zur Kollisionsvermeidung erforderlich sind, zu umgehen. Dies kann im einfachsten Fall erreicht werden, indem ausschließlich zwei Busteilnehmer (Endgeräte), die Daten miteinander austauschen, freigeschaltet werden, während die übrigen Busteilnehmer inaktiviert werden. Das Datennetz stellt auch über mehrere Knoten hinweg eine reine Punkt-zu-Punkt Verbindung dar und die erreichbare Netzausdehnung wird nur von der Signalverformung auf dem Übertragungsweg begrenzt.

Nachfolgend sind an Hand der Zeichnungen zwei Ausführungsbeispiele der Erfindung näher beschrieben.

Es zeigen:
- Fig. 1: die schematische Darstellung eines Datenbusses mit einem über Knoten verzweigten Datennetz,

- Fig. 2: eine Variante des Datenbusses nach Fig.1,
- Fig. 3: die schematische Darstellung eines Knotens,
- Fig. 4: die schematische Darstellung der Schnittstelle des Knotens,
- Fig. 5: die schematische Darstellung der Verteileinrichtung des Knotens,
- Fig. 6: eine Variante der Verteileinrichtung nach FIG.5.

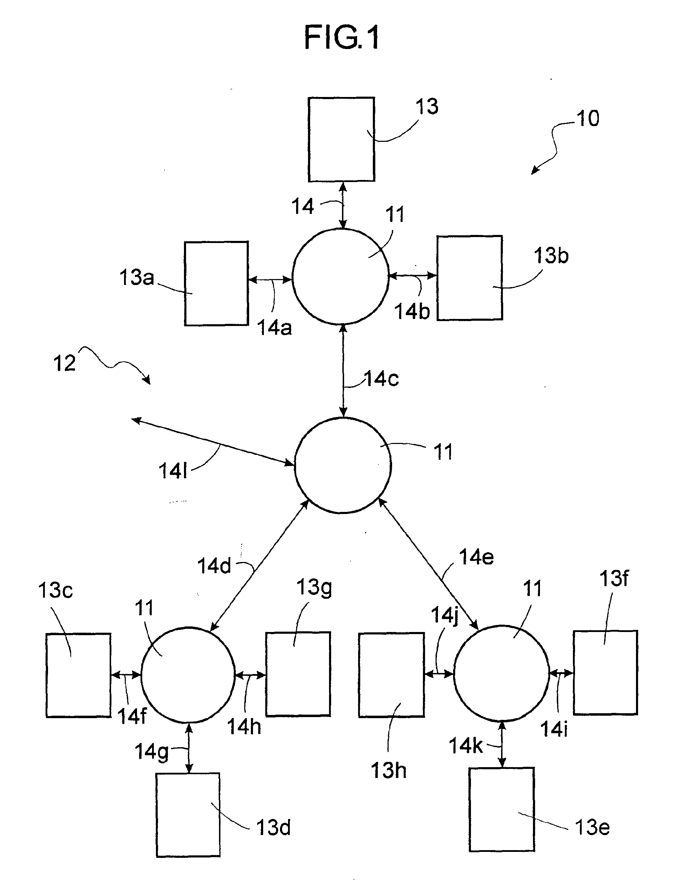

Die Figur 1 der Zeichnungen zeigt einen Datenbus 10 mit einem über Knoten 11 verzweigten analogen oder digitalen Hochfrequenz-Datennetz 12. An das Datennetz 12 sind Busteilnehmer 13, 13a bis 13f angeschlossen, die untereinander einen Datenverkehr in beiden Richtungen durchführen können. Beispielsweise kann es sich bei den Busteilnehmern 13, 13a bis 13f um Sensoren und Aktoren handeln, die untereinander kommunizieren. Ferner kann es sich bei dem Busteilnehmer 13 um ein Multi-Media-Gerät, z.B. eine Videokamera handeln, die über das Datennetz 12 Videosignale an einen Busteilnehmer 13c überträgt, der ein Monitor ist, der Videobilder empfängt.

Wie aus Figur 1 hervorgeht, besteht das Datennetz 12 aus Datennetzzweigen oder Anschlussleitungen 14, 14a bis 14k. Der Datenverkehr des Busteilnehmers 13 zum Busteilnehmer 13c läuft über drei Knoten 11. Mit jedem Knoten 11 sind jeweils vier Anschlussleitungen zusammengeführt.

Mit den Knoten 11 erfolgt eine Verknüpfung der Anschlussleitungen 14, 14a bis 14k zu einem "schnellen Datennetz" 12. Das Datennetz in Baumstruktur mit einer an sich niedrigen Datenübertragungsrate wird durch die Verwendung von aktiven oder passiven Knoten 11 zu einem Datennetz mit einer hohen Datenübertragungsrate >1 Mbit/s, so dass beispielsweise Videoübertragungen möglich sind.

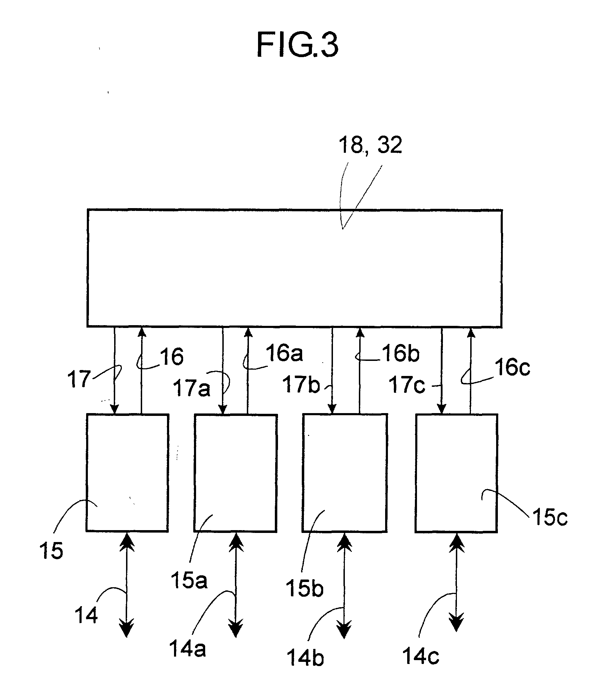

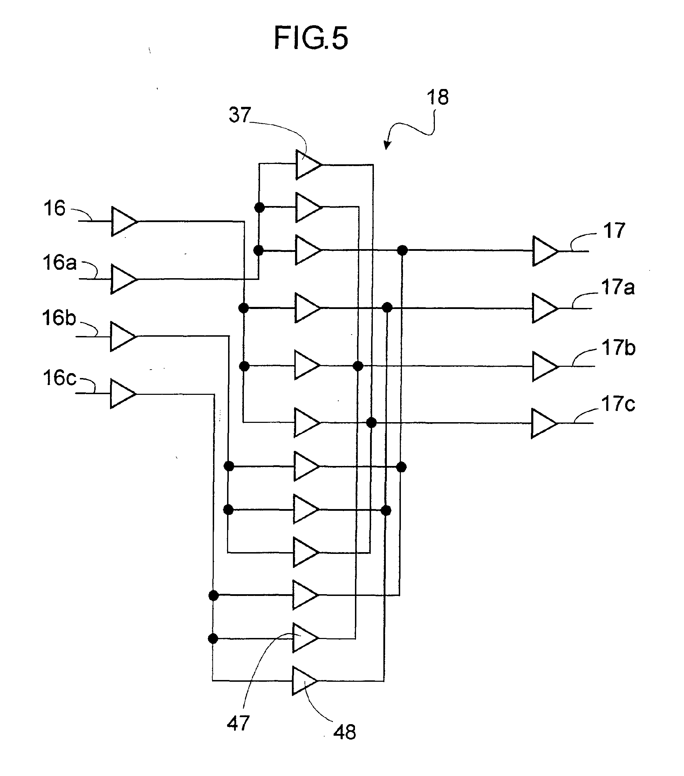

Die Figur 3 der Zeichnung zeigt die Komponenten einer Ausführung eines Knotens 11. Dieser Knoten weist Schnittstellen 15a, 15b, 15c, 15d auf, die über Ein- und Ausgänge 16, 16a, 16b, 16c; 17, 17a, 17b, 17c mit einer Verteileinrichtung 18 verbunden sind. Bei der Verteileinrichtung 18 kann es sich um ein aktives oder passives Koppelfeld gemäß Figur 5 handeln.

Insgesamt sind vier Schnittstellen 15a, 15b, 15c, 15d vorhanden, die jeweils gleich aufgebaut sind. Der Knoten 11 ist dementsprechend für den Anschluss von vier Anschlussleitungen 14, 14a, 14b, 14c ausgeführt (4-fach Knoten). Selbstverständlich können mehr oder weniger Schnittstellen vorgesehen werden, die einen 2-fach, 3fach oder 5-fach-Knoten bilden.

Die Schnittstellen 15, 15a, 15b, 15c enthalten Mittel 19 zum Erkennen der Datenrichtung von durchlaufenden Daten, z.B. Datentelegrammen. In Abhängigkeit von der Datenrichtung erfolgt die Aufteilung des Datenstromes mit der Verteileinrichtung 18 auf die Anschlussleitungen 14, 14a, 14b, 14c. Wenn z.B. Daten über die Anschlussleitung 14 in den Knoten 11 ankommen, werden sie auf die Anschlussleitungen 14a, 14b, 14c verteilt.

Wie Figur 5 am besten zeigt, werden beispielsweise die über den Eingang 16 ankommenden Daten auf die Ausgänge 17a, 17b, 17c verteilt, nicht jedoch in den Ausgang 17 der Schnittstelle 15.

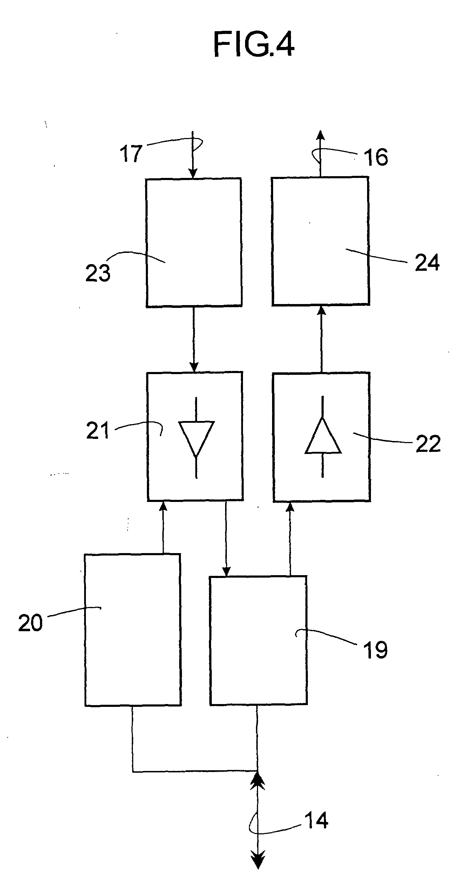

Die Figur 4 zeigt eine einzelne aktive Schnittstelle 15. Die übrigen Schnittstellen 15a, 15b, 15c können den gleichen Aufbau haben. Im einzelnen besteht die Schnittstelle 15 aus der Datenrichtungserkennungs-Schaltung 19, einer Betriebsbereitschaftserkennungs-Schaltung 20, beispielsweise einer Leitungsfehlerabschlusserkennungsschaltung, mit der erkannt wird, ob z.B. eine Anschlussleitung 141 defekt ist oder ob an der Anschlussleitung ein Busteilnehmer 13 angeschlossen ist oder nicht. Wird ein Leitungsfehlabschluss erkannt, koppelt die Leitungsfehlerabschlusserkennungsschaltung 20 diese Anschlussleitung 141 vom Datennetz 12 ab, so dass Mehrfachreflexionen und Echos nicht in das Datennetz 12 eingespeist werden.

Die Schnittstelle 15 weist ferner einen Sende- und Empfangsverstärker 21, 22 sowie eine Senderpulsformstufe 23 und eine Empfängerpulsformstufe 24 auf.

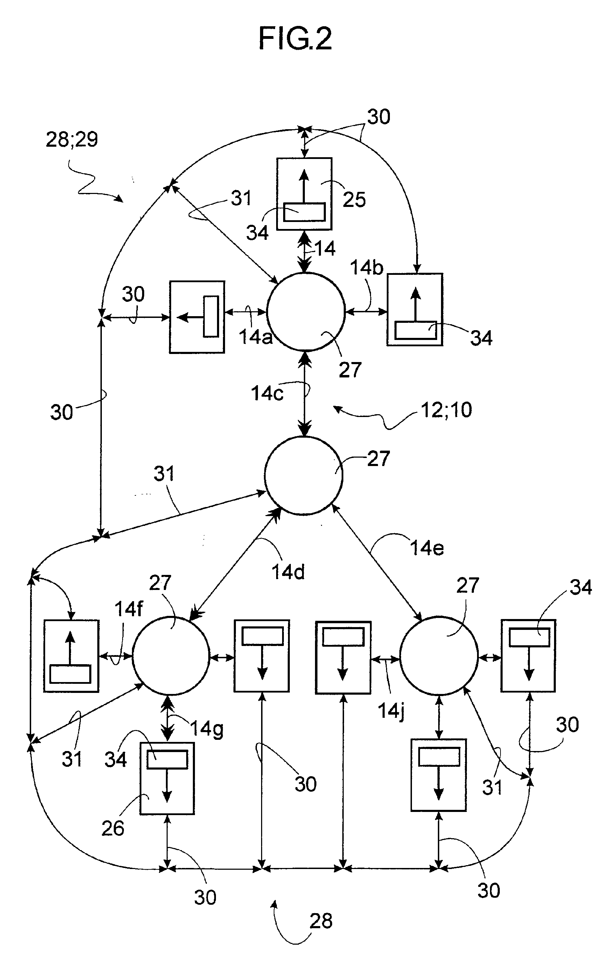

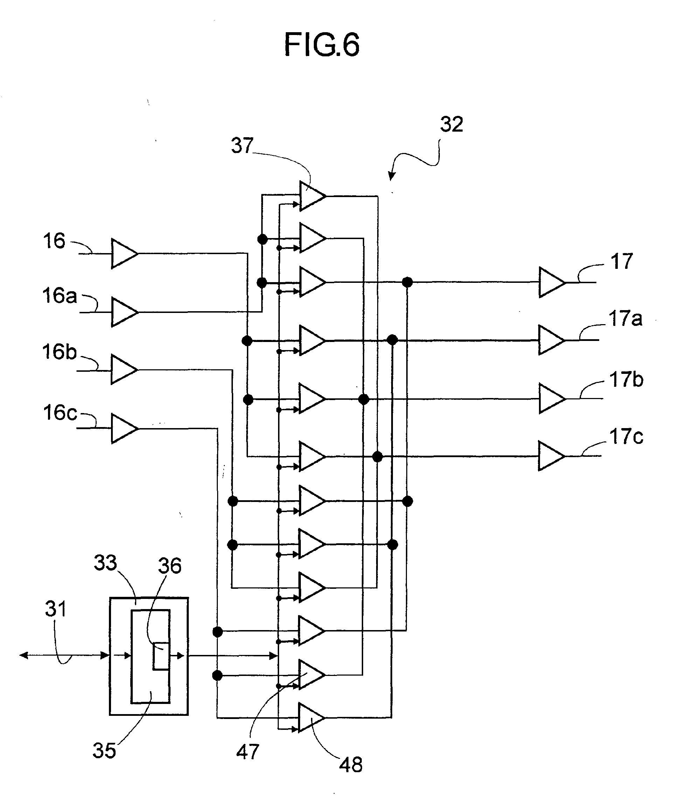

Die Figur 2 der Zeichnungen zeigt eine Variante des Datenbusses gemäß Figur 1. Diese Variante nach Figur 2 erlaubt zwischen den Busteilnehmern 25 und 26 eine Breitbandübertragung mit Netzfreischaltung. Die Netzfreischaltung erstreckt sich im Ausführungsbeispiel über die Anschlussleitungen 14, 14c, 14d und 14g, wobei alle anderen Anschlussleitungen abschaltbar sind. Für diesen Zweck ist zusätzlich zum Datennetz 12 des Datenbusses 10 ein Datennetz 28 in Form eines Steuerbusses 29 vorgesehen. Das Datennetz 28 ist über Leitungsnetzzweige 30 an die Busteilnehmer 25 und 26 und über Leitungsnetzzweige 31 an eine Steuerung 33 der Verteileinrichtung 32 des Knotens 27 angeschlossen (Fig.6). Die Steuerung 33 dient zum Freischalten einer Anschlussleitung 14, 14c, 14d, 14g.

Die Busteilnehmer 25, 26 besitzen Datenbuszugriffsberechtigungsmittel 34, mit denen über das Datennetz des Steuerbusses 29 Steuerdaten an die Freischaltsteuerungen 33 der Knoten 27 gesendet werden. Diese Steuerdaten, bei denen es sich um Datentelegramme handeln kann, enthalten eine Nachricht für die Freischaltsteuerung 33. Die Freischaltsteuerung 33 enthält eine Auswerteeinrichtung 35 zum Steuern eines Schaltelementes 37 bis 48 der Verteileinrichtung 32. Auf der Grundlage der Nachricht erkennt die Auswerteeinrichtung 35 welche der Schaltelemente 37 bis 48 aktiviert werden sollen, und steuert die Aktivierungsmittel 36 für das betreffende Schaltelement.

Bei dem Datennetz 28 für den Steuerbus 29 kann es sich um das EIB-Netz oder das LON-Netz handeln. Der Vorteil bei vorhandenen EIB-Strukturen besteht darin, dass EIB-Strukturen zwei Adernpaare haben und somit das zweite Adernpaar als Datennetz 12 für den Steuerbus 10 benutzt werden kann und dadurch höherbitratige Daten führen kann.

## Patentansprüche

1. Datenbus-Einrichtung mit einem über Knoten (11;27) verzweigten Datennetz (12;28), an dessen Zweigenden Busteilnehmer (13, 13a bis 13f; 25, 26) anschließbar sind, zwischen denen in beiden Richtungen ein Datenverkehr durchführbar ist, der über wenigstens einen Knoten (11; 27) läuft, mit dem wenigstens zwei Anschlussleitungen verbunden sind,
**dadurch gekennzeichnet,**
**dass** für jede Anschlussleitung des Knotens (11;27) Mittel (19) zum Erkennen der Datenrichtungen von durchlaufenden Daten vorgesehen sind, dass für jede Anschlussleitung des Knotens Mittel (18;32) zum richtungsabhängigen Verteilen der auf dieser Anschlussleitung ankommenden Daten auf die anderen Anschlussleitungen vorgesehen sind, und dass Mittel (18;32) vorgesehen sind, die verhindern, dass die auf einer Anschlussleitung (14, 14a bis 14j) ankommenden Daten wieder in diese Anschlussleitung eingekoppelt werden.

2. Einrichtung nach Anspruch 1, **dadurch gekennzeichnet, dass** der Knoten (11;27) Mittel (20) zum Erkennen der Betriebsbereitschaft seiner Anschlussleitungen und Mittel zum Abkoppeln der nicht betriebsbereiten Anschlussleitungen enthält.

3. Einrichtung nach Anspruch 1 oder 2, **dadurch gekennzeichnet, dass** der Knoten (11;27) Mittel (21,22) zum Verstärken der verteilten Datensignale enthält.

4. Einrichtung nach einem der Ansprüche 1 bis 3, **dadurch gekennzeichnet, dass** zusätzlich zum Datennetz (12) des Datenbusses (10) ein Steuerbus (29) vorgesehen ist, der die Knoten in der Weise steuert, dass die Knoten über ihre Anschlussleitungen einen vorgegebenen Signalweg durchschalten.

5. Einrichtung nach Anspruch 4, **dadurch gekennzeichnet, dass** wenigstens zwei Busteilnehmer (25, 26) an den Steuerbus (29) angeschlossen sind, und die Busteilnehmer Mittel enthalten, mit denen in Abhängigkeit einer Datenbuszugriffsberechtigungseinrichtung (34) über den Steuerbus (29) Steuerdaten an eine Freischaltsteuerung (33) des Knotens (27) gesendet werden.

6. Einrichtung nach Anspruch 5, **dadurch gekennzeichnet, dass** die Steuerdaten eine auf der Zugriffsberechtigungseinrichtung (34) basierende Nachricht für die Freischaltsteuerung (33) enthalten.

7. Einrichtung nach Anspruch 5 oder 6, **dadurch gekennzeichnet, dass** die Freischaltsteuerung (33) Mittel (35) zur Überwachung der Steuerdaten, die eine Nachricht für die Freischaltsteuerung enthalten, sowie zum Steuern von Schaltelementen (37 bis 48) der Verteileinrichtung auf Grund der Nachricht und Mittel (36) zum Aktivieren des Schaltelementes enthält.

8. Einrichtung nach einem der Ansprüche 1 bis 7, **dadurch gekennzeichnet, dass** die Mittel zum Verteilen (18;32) als Koppelfeld ausgebildet sind.

9. Einrichtung nach Anspruch 8, **dadurch gekennzeichnet, dass** die Steuerung (33) zum Freischalten einer Anschlussleitung (14, 14a bis 14j) auf das Koppelfeld wirkt.
